# EUROPEAN PATENT APPLICATION

(11) **EP 4 624 114 A1**
(43) Date of publication of application: **01.10.2025**
(21) Application number: 24905117.8
(22) Date of filing: 28.10.2024
(51) Int. Cl.: B25J 13/08, B25J 9/16, B25J 11/00, G05D 1/246, G05D 1/243, G05D 1/43, G05D 109/10

(54) **METHOD FOR CONTROLLING ROBOT ON BASIS OF HYBRID MAP**

(30) Priority: 29.01.2024 KR 20240013491; 23.10.2024 KR 20240145953
(71) Applicant: DOGU CO., LTD., Daegu 41496 (KR)
(72) Inventor: QUAN, Cheng Hao, Dongdaemun-gu Seoul 02512 (KR); TRAN, Quoc Huy, Gangseo-gu Seoul 07674 (KR); KIM, Jin Hyo, Sokcho-si Gangwon-do 24805 (KR)
(74) Representative: BCKIP Part mbB
(86) International application number: PCT/KR2024/016554
(87) International publication number: WO 2025/164880

(57) **Abstract**

A control method of a hybrid map-based robot includes receiving satellite information of a target region, generating a first map of the target region based on the satellite information, dividing a region in the first map according to a preset reference, receiving 3D information (point cloud data) for a region including a road available for the robot to drive on among the divided regions, generating a second map based on the 3D information, generating a hybrid map by aligning the first map and the second map in an overlapping manner, and determining a location of the robot within the target region, wherein the robot drives using one of the different formats of maps forming the hybrid map depending on a location within the target region.

## Description

### [Technical Field]

The present invention relates to a method for estimating a location of a robot and selecting a map generated based on one format from a map formed by overlapping different formats of maps based on the estimated location.

### [Background Art]

A map required for autonomous driving of a mobile robot refers to information that digitizes a target space in which a robot moves and works, and is divided into two types depending on the form of expression of the map: metric and topology.

Among the two types of maps, the metric type is a method of precisely expressing a surrounding environment of the robot in an occupation/non-occupation form, which is widely used in a simultaneous localization and mapping (SLAM) method in which the robot recognizes the environment using a sensor thereof and forms a map based on the information, and is a method of updating the map by probabilistically modeling the uncertainty occurring in the sensor.

This type of map is a map generated by the robot upon recognizing an environment in an unknown environment and has the advantage of being able to estimate a location of the robot using the generated map information. However, since a lot of memory is required to generate a map and the environment is only expressed as being occupied/unoccupied, there is a problem in which, for example, parts that connect spaces cannot be expressed as semantic information, such as doors, stairs, and hallways. Therefore, a map using a semantic segmentation technique is generally used to recognize regions.

Meanwhile, the topology type is a method of expressing the environment in a simple and clear graphic form, having the advantage of being able to efficiently express a large space with a small memory and simplifying path planning for driving, but it may be difficult for the robot to find topology information on its own and it may be difficult to estimate the location of the robot using map information alone.

Therefore, as the target space expands due to the development of autonomous driving technology for robots, more memory is required for map creation, and the use of a map requiring a large memory may deteriorate the autonomous driving performance of the robot, so a solution to this problem is needed.

In addition, in the case of existing robot control systems, there is a problem in that information on the same type of robots may be received or controlled and it is impossible to simultaneously control heterogeneous robots In addition, in the case of transmitting the same content to a plurality of heterogeneous robots, the content suitable for each type of robot has to be input.

In addition, the legacy system used for existing work cannot automatically issue or assign commands to robots, and a control system for each type of robots has to manually issue commands to robots directly, which is inconvenient to use robots.

The number of robots has increased and robots have also been increased accordingly, so although the productivity of work has increased in terms of replacing humans, the problem is that the complexity and time of management work have also increased. Therefore, a system that integrates and controls the work of managing various heterogeneous robots is needed.

In addition, in the existing robot control system, heterogeneous robots may interfere with each other when performing individual missions assigned thereto, which leads to a problem that users have to manually control each robot to directly resolve the situation of interference.

### [Disclosure]

### [Technical Problem]

An object of the present invention is to improve the autonomous driving performance of a robot by generating a driving path of a robot through a hybrid map generated by aligning a plurality of maps formed in different formats for a target space in an overlapping manner and selecting a map of an appropriate format based on the generated driving path to generate a simple map required for driving of the robot.

One of various tasks of the present invention is to provide a system that may detect and control interference situations that may occur when heterogeneous robots perform their respective assigned tasks in advance.

One of various tasks of the present invention is to provide a control method of granting driving priority to a robot when movement paths of heterogeneous robots overlap each other during movement.

One of various tasks of the present invention is to provide a reference for selecting one of various map data included in a hybrid map based on an estimated location of a mobile robot.

One of various tasks of the present invention is to provide a reference for selecting a map data converting point between various map data included in a hybrid map based on a driving path of a mobile robot, a mission scenario, and a location of the robot.

### [Technical Solution]

According to an exemplary embodiment of the present invention, a control method of a hybrid map-based robot includes: receiving satellite information of a target region; generating a first map of the target region based on the satellite information; dividing a region in the first map according to a preset reference; receiving 3D information (point cloud data) for a region including a road available for the robot to drive on among the divided regions; generating a second map based on the 3D information; generating a hybrid map by aligning the first map and the second map in an overlapping manner; and determining a location of the robot within the target region, wherein the robot drives using one of the different formats of maps forming the hybrid map depending on a location within the target region.

The first map may be a 2D map of the target region based on the satellite information.

The preset reference may be a reference as to whether a road is a road available for the robot to drive on.

The hybrid map may be generated by aligning the first map and the second map in an overlapping manner based on a boundary line of a region that meets the preset reference.

The hybrid map may be generated by converting coordinates of the first map into a local coordinate system and then aligning the local coordinate system with the second map in an overlapping manner.

The control method may further include: setting a driving path of the robot, wherein the robot drives using one of the different formats of maps forming the hybrid map according to a location on the driving path.

The control method may further include: generating a space map based on the 3D information; converting the space map into a 2D map; and generating a third map by aligning the first map with the converted 2D map in an overlapping manner, wherein the hybrid map is generated by aligning at least two maps among the first map, the second map, the third map, and the space map in an overlapping manner.

The second map may be a feature map generated based on feature points extracted from the space map.

The control method may further include: setting a driving path of the robot, wherein the space map is generated based on 3D information collected along the driving path of the robot..

The second map may include information generated based on feature points of objects existing on the driving path, and the third map may include 2D type location information of the objects.

The robot may drive using one of different formats of maps forming the hybrid map based on a current location and information about the objects within the target region.

The robot may drive using one of the second map or the third map depending on the current location of the robot and distances to the objects.

The control method may further include: a matching degree determining operation of determining whether a matching degree of a reference region is equal to or greater than a preset reference value when the first map is aligned with the converted 2D type map in an overlapping manner.

The converting of the space map into a 2D map, the generating of the third map, and the determining of the matching degree may be performed sequentially.

The converting of the space map into a 2D map, the determining of the matching degree, and the generating of the third map may be performed sequentially, and the generating of the third map may be performed when the matching degree of the reference region is equal to or higher than the preset reference value in the determining of the matching degree.

The hybrid map may be generated by aligning the second map and the third map in an overlapping manner.

According to another exemplary embodiment of the present invention, a control method of a hybrid map-based robot includes: receiving satellite information of a target region; generating a first map of the target region based on the satellite information; dividing a region in the first map according to a preset reference; setting a driving path of a robot, receiving 3D information (point cloud data) for a region including a driving path of the robot among the divided regions; generating a second map based on the 3D information; generating a hybrid map by aligning the first map and the second map in an overlapping manner; and determining a location of the robot within the target region, wherein the robot drives using one of the different formats of maps forming the hybrid map according to a location within the target region.

According to another exemplary embodiment of the present invention, a control apparatus of a hybrid map-based robot that drives in a target region includes: a communication unit transmitting and receiving information necessary for generating a map; a map generating unit generating a map of the target region by aligning two or more different formats of maps in an overlapping manner, a location estimation unit determining a location of the robot; and a processor selecting one of two or more maps formed in different formats according to the location of the robot, wherein the map generating unit aligns a first map generated based on satellite information of the target region and a second map generated based on 3D information of the target region in an overlapping manner, and the processor selects one of the first map and the second map as a map for driving of the robot based on a current location of the robot and location information of objects included in the 3D information.

According to another exemplary embodiment of the present invention, there is provided a program stored on a computer-readable recording medium including a program code for executing the control method of a hybrid map-based robot described above.

According to another exemplary embodiment of the present invention, there is provided a computer-readable recording medium including a program code for executing the control method of a hybrid map-based robot described above.

The features of each of the aforementioned embodiments may be implemented in combination in other embodiments as long as they are not contradictory or exclusive to other embodiments.

### [Advantageous Effects]

According to various exemplary embodiments of the present invention, by generating a single integrated map without being limited to the specifications of a robot, a mission assigned to the robot, a driving target environment of the robot, etc., the robot may be operated efficiently.

In addition, when a situation arises in which heterogeneous robots interfere with each other while performing their respective assigned tasks, it is possible to prevent collisions between robots, hindering mission performance, and occurrence of abnormal situations by giving priority to one robot.

The effects of the present invention are not limited to those described above, and other effects not mentioned may be clearly recognized by those skilled in the art from the description below.

### [Description of Drawings]

FIG. 1 is a diagram illustrating a configuration for controlling a robot and components of a robot according to an exemplary embodiment of the present invention.
FIG. 2 is a diagram illustrating a configuration of a robot control system according to an exemplary embodiment of the present invention.
FIGS. 3 and 4 are diagrams illustrating a map generating method according to an exemplary embodiment of the present invention.
FIG. 5 to FIG. 13 are diagrams illustrating maps according to an exemplary embodiment of the present invention.
FIGS. 14 and 15 are diagrams illustrating a robot according to an exemplary embodiment of the present invention.
FIGS. 16 and 17 are diagrams illustrating a method of generating a driving path of a robot according to an exemplary embodiment of the present invention.

### [Best Mode]

Hereinafter, exemplary embodiments of the present invention are described with reference to the accompanying drawings. The following description is provided to aid in the comprehensive understanding of methods, devices, and/or systems disclosed in the particularities. However, the following description is merely exemplary and not provided to limit the present invention.

In the following description of the present invention, a detailed description of known functions and configurations incorporated herein will be omitted when it would make the subject matter of the present invention unclear. The terms used in the present specification are defined in consideration of functions used in the present invention, and may be changed according to the intent or conventionally used methods of clients, operators, and users.

Definitions of the terms should be understood on the basis of the entire description of the present specification. Terms used in the following description are merely provided to describe exemplary embodiments of the present invention and are not intended to limit of the inventive concept. As used herein, the singular forms "a," "an" and "the" are intended to include the plural forms as well, unless the context clearly indicates otherwise.

It will be further understood that the terms "comprises" or "has" when used in this specification, specify the presence of stated features, integers, steps, operations, elements, or a portion or combination thereof, but do not preclude the presence or addition of one or more other features, integers, steps, operations, elements, or a portion or combination thereof.

In describing the elements of the present invention, terms, such as first, second, A, B, (a), B, etc., may be used. Such terms are used for merely discriminating the corresponding elements from other elements and the corresponding elements are not limited in their essence, sequence, or precedence by the terms.

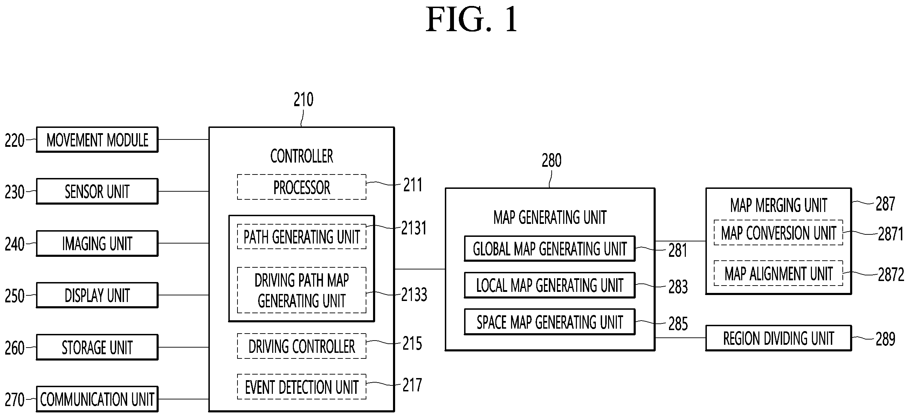

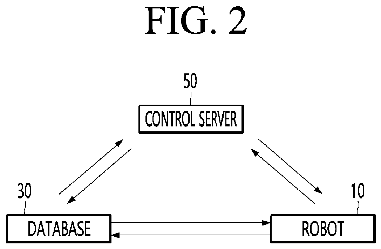

FIG. 1 is a diagram illustrating a configuration for creating a map and a configuration of a robot according to an exemplary embodiment of the present invention, and FIG. 2 is a diagram illustrating a configuration of a robot control system according to an exemplary embodiment of the present invention.

Hereinafter, descriptions are given with reference to FIGS. 1 and 2.

The robot control system of the present exemplary embodiment may include a robot 10, a database 30, and a server 50.

The robot 10 may include a robot having various shapes and various components that may drive indoors and outdoors and may perform a mission by transmitting and receiving information, such as map information, driving information, and path information with the database 30 and the server 50.

Meanwhile, referring to FIG. 1, the robot 10 of the present exemplary embodiment may include a controller 210, a movement module 220, a sensor unit 230, an imaging unit 240, a display unit 250, a storage unit 260, and a communication unit 270. The movement module 220 may include a motor, a gear assembly, and wheels and may provide driving force for the movement (driving) of the robot. Wheel-based robots mainly control the direction and speed using DC motors and gears, and the robot may move precisely to a desired location through the movement module.

The sensor unit 230 may include various sensors that may obtain information on a target space, while the robot drives through the target space. In other words, the sensor unit may perform the role of allowing the robot to recognize the environment and collect data.

For example, the sensor unit 230 may include various sensors, such as LIDAR, ultrasonic sensors, infrared sensors, and inertial measurement unit (IMU), and the robot may detect an obstacle in the surroundings and collect data in real time through the sensors to perform path search.

The imaging unit 240 may include a real-image sensor unit (not shown) that captures a real image, a thermal image sensor unit (not shown) that acquires a thermal image, etc. For example, the real-image sensor unit (not shown) may be implemented as an RGB camera, and the thermal image sensor unit (not shown) may be implemented as an infrared camera. Through the configuration of the imaging unit 240, the robot 10 may accurately identify objects not only in an environment with high illumination, such as the daytime, but also in an environment with low illumination, such as nighttime.

That is, the imaging unit 240 is a device necessary for the robot to collect visual data, and the robot may obtain important information necessary for object recognition, path setting, and environment mapping by analyzing the image captured by the imaging unit 240, and the information may be used together with the information collected by the sensor unit to perform more precise environment recognition.

The display unit 250 may display a status of the robot 10, time, weather, information on a target space, etc. In terms of the robot control system of the present exemplary embodiment, for example, when the robot 10 cannot drive or perform a mission due to an event, the robot 10 may transmit status information of the robot 10 to the server 50 and then wait until a worker arrives at a location at which the status information was transmitted to the server 50 and a separate command is input, while displaying at least a portion of the status information of the robot 10 through the display unit 250.

That is, the display unit 250 may display a general status of the robot, information required for a mission, and information to be provided to a user or worker, and may, of course, display information required for the robot control system.

The storage unit 260 may store programs for an operation of the robot 10, map information, a captured image, a scenario for performing a mission, etc. More specifically, the storage unit 260 may store data collected while the robot 10 is driving or information received from the database 30 or the server 50. The information may include map information, path information, sensor information, etc., and the information may be stored in real time.

The communication unit 270 may include one or more modules that enable the robot 10 to communicate with other devices (e.g., a remote control system, the server 50, another robot, the database 30, etc.).

The controller 210 may include a processor 211, a path generating unit 2131, a driving path map generating unit 2133, a driving controller 215, an event detection unit 217, and a location estimation unit 219.

The controller 210 may perform a role of managing and controlling all operations of the robot. The controller 210 may process information collected by the sensor unit 230 and the imaging unit 240, calculate the driving path of the robot 10, and issue a command to the movement module 220. In addition, responses to various events occurring while the robot 10 is moving may also be processed by the controller 210.

The processor 211 may process information acquired from various components included in the robot described above. For example, the processor 211 may process the information collected by the sensor unit 230 and the imaging unit 240 in real time and calculate a path and movement of the robot. The path generating unit 2131 and the driving path map generating unit 2133 may select one of the maps formed by aligning (merging) at least two different formats of maps generated through the map generating unit 280 and may generate a driving path of the robot through the path generating unit 2131 within the selected map or generate a map used by the robot based on the driving path generated through the driving path map generating unit 2133.

The driving path map refers to a simplified map including nodes, edges, and context information included in each node or edge generated according to the examples described below. The node may represent an object that is a mission execution target of the robot or a point at which the status of the robot on the driving path changes (e.g., a change in driving direction, etc.), the edge may connect the nodes and represent a driving path of the robot between the nodes, and the context information may represent a control command value of the robot, information on the nodes, etc. at the nodes or edge.

Meanwhile, the path generating unit 2131 may generate a driving path between objects through a map generated by a global map generating unit 281, and in the vicinity of an object (a predetermined region based on the object), the path generating unit 2131 may generate a path through a map generated by the local map generating unit 283, thereby generating a driving path more effectively, and similarly, when modifying the generated driving path for other reasons, the path generating unit 2131 may quickly respond to other reasons by modifying the driving path according to the reference described above.

In addition, as an example, the path generating unit 2131 may generate a path candidate group including a plurality of driving paths on which the robot 10 may perform a mission in a target space (map information) and select an optimal path from the generated path candidate group based on preset reference to generate a driving path for the robot 10.

The preset reference may be based on whether a surveillance blind spot occurs in the object when surveillance priority according to the mission of the robot 10 is set for objects existing on the map information and the assigned mission (driving) is performed based on the preset priority.

Meanwhile, the driving path generated through the path generating unit 2131 or the driving path map generating unit 2133 may include paths for a plurality of robots. The paths for the plurality of robots may refer to paths for robots in a master-slave relationship or paths for heterogeneous robots.

More specifically, when a robot drives within the target region, a driving path of the robot may overlap a driving path of another robot, and thus, the paths for a plurality of robots may include a path overlapping the driving path of the robot, among the driving paths of at least the other robots.

As described above, when there is an overlapping section between the driving paths of a plurality of robots, a determination as to whether to give driving priority to which of robots may be made from the perspective of the server 50 or may be made from the perspective of the robot 10 or the database 30, which will be described in more detail below.

Meanwhile, the driving controller 215 may generate or transmit a signal for controlling the movement module 220. More specifically, a signal for controlling the movement module 220 may be generated by a control signal input from the server 50 through the communication unit 270, or a signal for controlling the movement module 220 may be generated based on a result processed through the processor 211 based on information on the target space acquired from the sensor unit 230 or the imaging unit 240.

The event detection unit 217 may detect an abnormal situation occurring in one of the objects existing in the target space, an abnormal situation occurring on the driving path of the robot, or an abnormal situation occurring in the robot, by the sensor unit 230, the imaging unit 240, the communication unit 270, and the processor 211.

The location estimation unit 219 may determine a location of the robot which is driving and may estimate (and determine) the location of the robot in various manners together with the sensor unit 230, the communication unit 270, the processor 211, the map generating unit 280, etc.

In addition, the controller 210 may use any one of the maps formed by overlapping different formats according to the location of the robot within the target region for the driving of the robot.

The map generating unit 280 may digitize the target space in which the robot 10 drives into various formats, and then generate a map for each format, and the map merging unit 287 may perform conversion and alignment of maps generated in each format. The aforementioned map conversion may be performed through the map conversion unit 2871, and the map alignment may be performed through a map alignment unit 2872.

A region dividing unit 289 may perform region division on a map generated through the global map generating unit 281 or a satellite map received through the communication unit 270.

The map generating unit 280, map merging unit 287, and region dividing unit 289 described above are described in more detail with reference to the drawings below.

Meanwhile, the map generating unit 280, map merging unit 287, and region dividing unit 289 may be included as a component of the robot 10 of the present exemplary embodiment. That is, the map generating unit 280, map merging unit 287, and region dividing unit 289 may be included as subcomponents (onboard system) of the robot.

However, the present invention is not limited thereto, and from the perspective of the robot control system, the the map generating unit 280, map merging unit 287, and region dividing unit 289 may be included in the database 30 and server 50 to be provided independently of the robot. If the map generating unit 280, map merging unit 287, and region dividing unit 289 are provided independently of the robot, the generated map may be transmitted to the robot through the communication unit 270.

Meanwhile, the database 30 may store map information for the target space, information on a plurality of scenarios, driving paths, types of events, etc. For example, the map information may include various map information for expressing the target space, and may include, for example, a satellite map (2D Map), simultaneous localization and mapping (SLAM) information, point cloud data (PCD), a topological map, a semantic map, a high-definition (HD) map, etc. for the target space.

The server 50 may transmit map information to the robot 10, may assign a mission to the robot 10, or may perform a robot 10 control task according to the assigned mission.

Of course, the server 50 may also act as an information relay point between the robot 10 and the database 30 on the robot control system, and some of the vehicle event type identification, map information transmission, and robot control command transmission may be performed in the database 30 or through a component mounted on the robot 10.

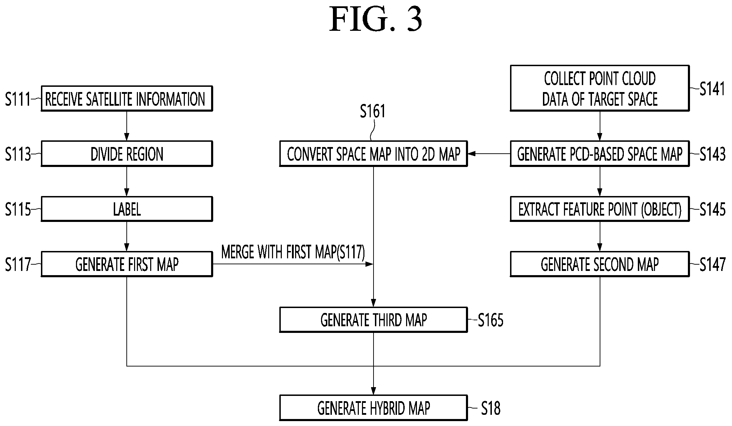

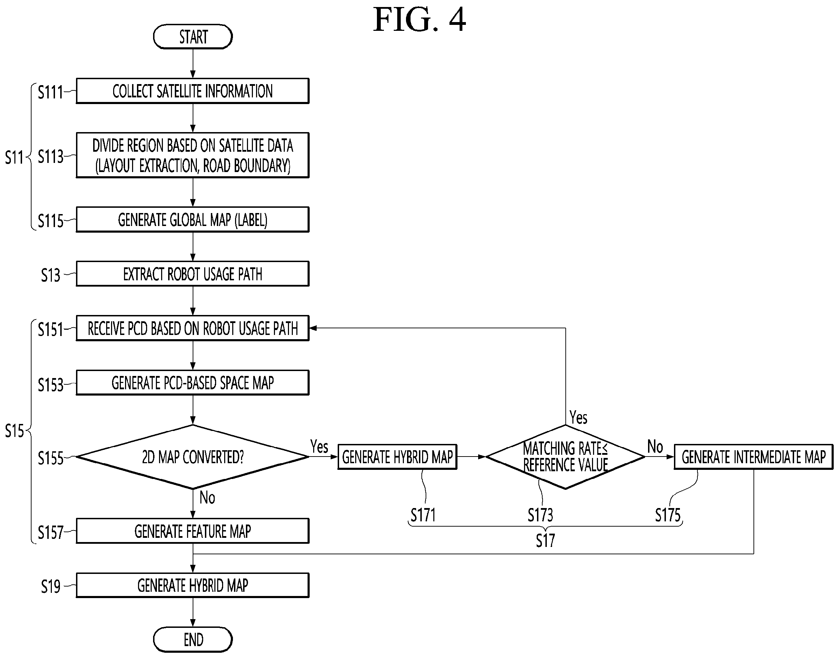

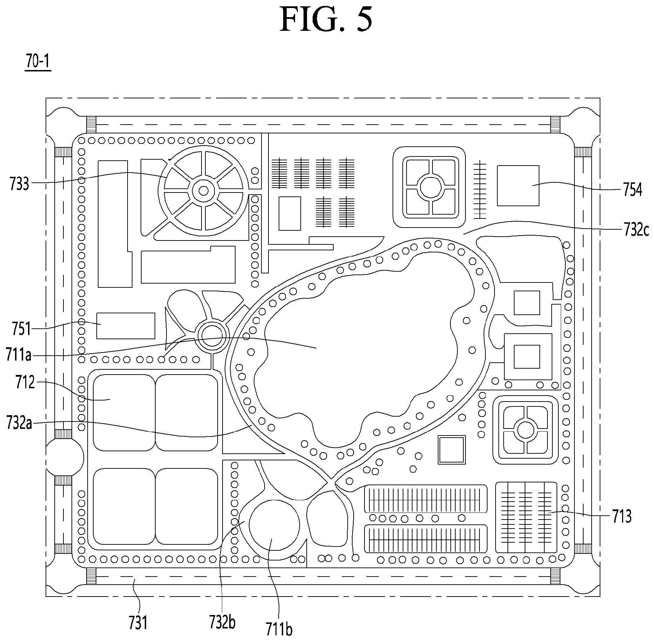

FIGS. 3 and 4 are diagrams illustrating a map generating method according to an exemplary embodiment of the present invention, and FIGS. 5 to 13 are diagrams illustrating maps according to an exemplary embodiment of the present invention.

The following descriptions are given with reference to FIGS. 1 to 13.

In the present exemplary embodiment, a map used by the robot 10 to perform a mission is a map (hereinafter, a hybrid map) in which different formats of maps are merged (aligned in an overlapping manner and stacked), and may be divided into a global map and a local map depending on the form of the map.

The global map may refer to a 2D map generated by the global map generating unit 281 based on a satellite map received from the communication unit 270 or the database 30, and the local map may refer to a 3D map (space map, feature map) generated by the local map generating unit 283 based on point cloud information (point cloud data (PCD)) received from the communication unit 270 or the database 30.

The point cloud information required for generating the local map may be collected by the sensor unit 230 while the robot 10 drives for mapping the target space and may be stored in the storage unit 260.

The map merging unit 287 may generate a hybrid map using different formats of maps. More specifically, the map merging unit 287 may include a map conversion unit 2871 and a map alignment unit 2872. In order to generate a specific map, for example, the map conversion unit 2871 may convert the other format into a reference format based on one format among the different formats of maps, and the map alignment unit 2872 may align the map of the same format after conversion in an overlapping manner to generate the specific map.

Of course, the map alignment unit 2872 may align map information of different formats as described above in an overlapping manner to generate a single map. For example, objects that are mission targets based on the global map may be expressed as nodes, and detailed information of objects expressed as each node may be aligned with the information of the local map in an overlapping manner to generate a hybrid map.

More specifically, the 2D type satellite map received through the communication unit 270 may express data using a geographic coordinate system (e.g., latitude, longitude), and the map generated through the local map generating unit 283 or the space map generating unit 285 may express data using a local coordinate system or a world coordinate system to express 3D space (e.g., LiDAR, depth camera, etc.).

Therefore, the map merging unit 287 needs a process of converting into a common coordinate system in order to align the two coordinate systems used in the maps of the different formats (2D format, 3D format) described above.

According to an exemplary embodiment of the present invention, the map conversion unit 2871 may convert the coordinates (GPS coordinates) of the 2D satellite map into a local coordinate system based on the location of the robot or a specific reference point, and the map alignment unit 2872 may align the 2D satellite map converted into the local coordinate system and the local map expressing the 3D space based on the aforementioned reference.

In addition, the map conversion unit 2871 may find common features between the 2D satellite map and the 3D space map and set a reference for feature matching. For example, the map conversion unit 2871 may find a common point between two maps using edge detection that extracts road or building boundaries from the 2D satellite map and detects the same feature in the 3D map or an algorithm that extracts and matches feature points from the satellite map and the 3D space to set reference.

In order to align the two maps that have been converted or matched as described above, the map alignment unit 2872 may match the center points of the 2D map and the 3D map, adjust a rotation angle between the two maps to match the directions of the maps, and then adjust the sizes of the maps as needed so that the two maps may be expressed at the same ratio.

Also, the map alignment unit 2872 may perform error verification (matching degree determining operation S173) to determine whether the two maps are well overlapped, and at this time, for example, the accuracy of matching the point cloud information of the 3D map with the boundary line or road of the 2D map may be used as a reference.

Also, of course, in the map generated in this manner, the location of the robot 10 may be continuously estimated using the simultaneous localization and mapping (SLAM) algorithm as the robot moves and the alignment status between the maps may be updated in real time.

Referring to FIG. 3, a series of processes divided into operation S11 (S111 to S117) for generating a first map represents a process for generating the global map described above, a series of processes divided into operation S14 (S141 to S147) represents a process for generating a local map, and a series of processes divided into operation S16 (S161 to S165) represents a process for converting some information during the local map generating process into a 2D map and generating an intermediate map by merging the necessary information with the first map.

More specifically, referring to the process for generating a global map, the robot 10 may receive satellite information (S111) from the database 30 or the server 50 through the communication unit 270.

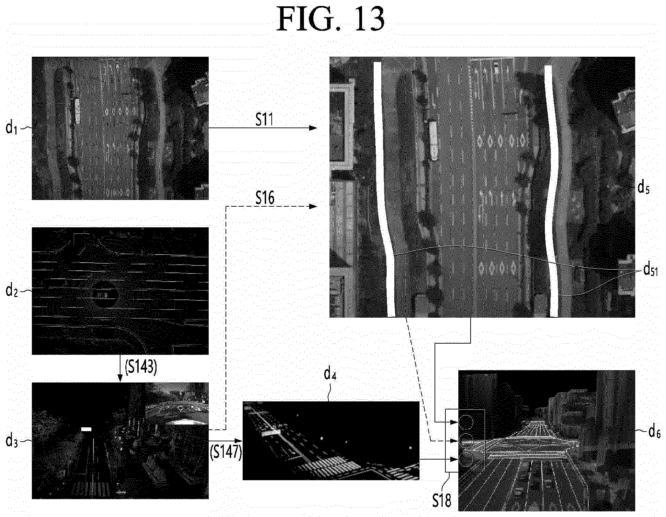

The satellite information may include an aerial photograph, an orthophoto, a true orthophoto, etc. of the target space and may be expressed as a photograph or image, such as an image 70-1 expressed in FIG. 5 or d1 in FIG. 13, for example.

More specifically, referring to the image 70-1 of the satellite information expressed in FIG. 5, various information on the target space may be expressed in the satellite information. For example, lakes 711a and 711b, a playground 712, a parking lot 713, a road 731 on which a vehicle may drive, roads 732a, 732b, and 732c that may be used by both people and robots or only by robots, a road 733 on which people may walk, a plurality of buildings 751 and 754, etc. may be expressed.

After receiving satellite information, the global map generating unit 281 may divide the region based on the received satellite information (S113) and perform labeling (S115) to generate a first map (S117).

The region dividing unit 289 may express information included in 2D layout data, such as the boundary of a road, the boundary of a building, and a road d51 that the robot may use, as expressed in d5 of FIG. 13, through region division (S113) on the satellite map.

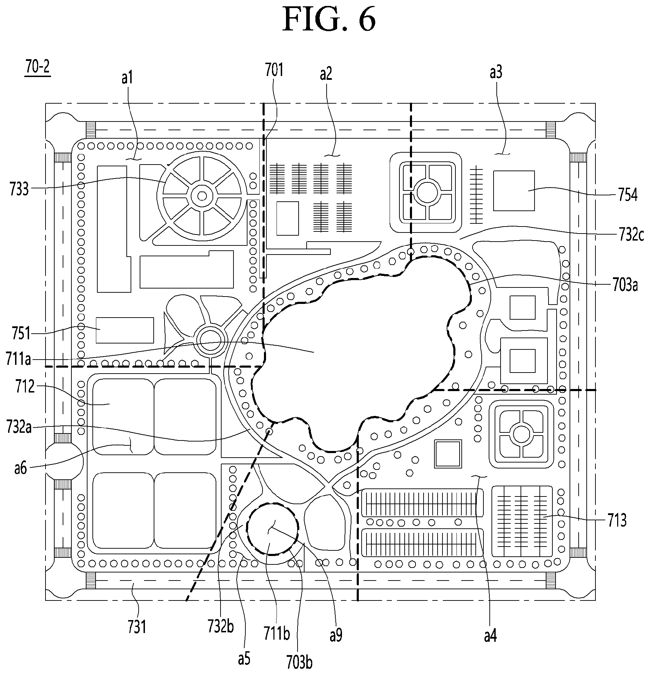

More specifically, referring to an image 70-2 for satellite information expressed in FIG. 6, the region divided in the region division operation (S113) may be divided into a1, a2, a3, a4, a5, and a6 based on the boundary 701, such as the amount of information that the robot may receive or the size of the region that the robot may drive. In addition, the divided region may be divided into predetermined regions 711a and 711b based on boundaries 703a and 703b in which the robot cannot drive.

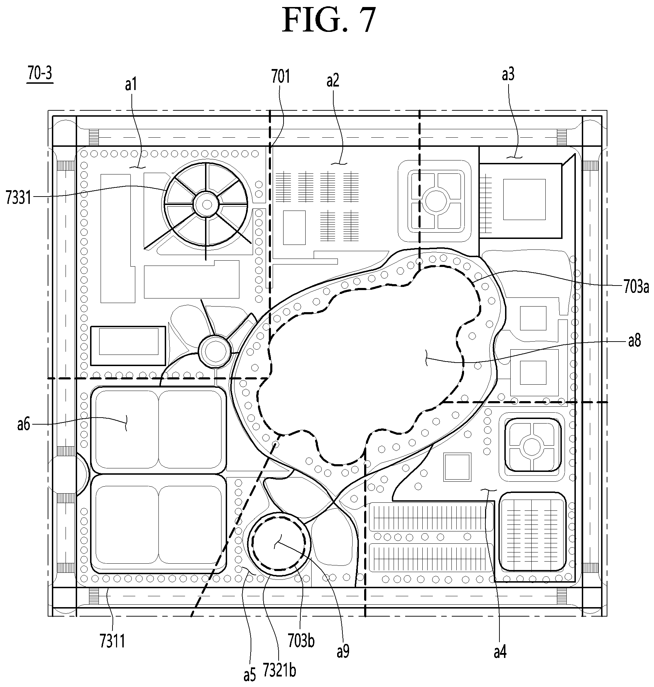

In addition, referring to an image 70-3 for the satellite information expressed in FIG. 7, the regions divided in the region division operation (S113) may be expressed as regions divided by a line 7311 of the road on which a vehicle may drive, a line 7321b of the road that may be used by both people and robots or only by robots, a line 7331 of the road on which people may travel, the boundary of a plurality of buildings, the boundary of a region, such as a playground or a parking lot, etc.

Meanwhile, labeling (S115) may be performed by inputting context information for each of the divided regions, necessary regions, or the expressed information. More specifically, by expressing the reference points selected based on the driving path of the robot or a mission scenario of the robot in the form of a node, a reference for receiving the PCD described below may be set and a topology map that generates the driving path of the robot by expressing the edge connecting the nodes on the global map may also be generated.

At least one of the 2D maps generated through the aforementioned process may be referred to as the first map in the present exemplary embodiment. The first map may refer to a map encompassing 2D maps generated for the target region based on satellite information, and may refer to a 2D satellite map for the target region based on satellite information, for example, or may refer to a map in which regions are divided according to a preset reference based on the received satellite map, or may refer to a topology map including nodes and edges selected based on a driving path of the robot or a mission scenario of the robot, etc.

That is, the first map may refer to at least one of various maps that may be generated based on the received satellite information.

Next, referring to the process of generating a local map, the robot 10 may collect point cloud information of the target space (S141) which may be expressed as d2 in FIG. 13, for example. The collecting refers to various methods of obtaining point cloud information (3D data), as described above.

Meanwhile, the space generating unit 285 may generate a space map d3 based on the point cloud information, and the generating of the space map may be briefly described as follows. The space map d3 may be generated through a post-processing operation of the acquired raw data (PCD, 3D data), and for example, after performing outlier removal (noise removal) through the acquired raw information, each data set may be aligned and merged to undergo a rendering task.

After a series of processes for generating the space map is performed, or during a series of processes, the local map generating unit 283 may generate a feature map d4 (S147) through an operation (S145) of extracting feature points for objects.

That is, the 3D map generated through the aforementioned process may be referred to as a second map d4 in the present exemplary embodiment.

Meanwhile, the map merging unit 287 may convert the space map generated based on the PCD into a 2D map through the map conversion unit 2871 (S161), and then merge the converted map with the first map through the map alignment unit 2872 (S163) to generate a third map d5 (S165).

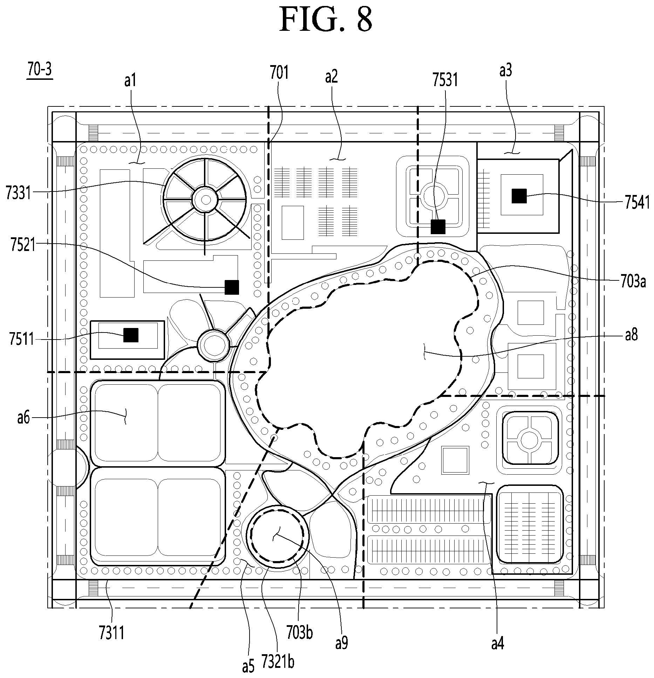

More specifically, the generated third map d5 may be expressed as 7511, 7521, 7531, and 7541 information on buildings necessary for the mission scenario of the robot or driving path among the buildings expressed on the space map as in the map image 70-4 expressed in FIG. 8 aligned in an overlapping manner on the image (first map, 70-3) for satellite information expressed in FIG. 7.

That is, the third map may express some of the information not expressed in the satellite information by aligning the 2D map converted through the space map (3D data) in an overlapping manner on the first map generated based on the satellite information (2D layout data). Therefore, in FIG. 13, the first map and the third map are expressed as d5 for convenience.

Meanwhile, the controller 210 may generate a hybrid map (S18) by merging at least two of the first map, the second map, and the third map through the map generating unit 280 and the map merging unit 287.

In addition, according to various exemplary embodiments of the present invention, the hybrid map may be formed by merging the second map and the third map.

In addition, according to various exemplary embodiments of the present invention, the hybrid map may be formed by merging the first map, the second map, and the third map.

Referring to FIG. 4, the robot 10 of the present exemplary embodiment may generate a global map (S11) through the aforementioned configuration and method, and the region dividing unit 289 may divide and extract (S13) a path (d51 of FIG. 5) that the robot 10 may use based on the generated global map.

The path that the robot may use may be set as a region that includes a portion of a boundary that is divided into a region in which a person may drive, from a boundary line that is divided into a region in which a vehicle may drive.

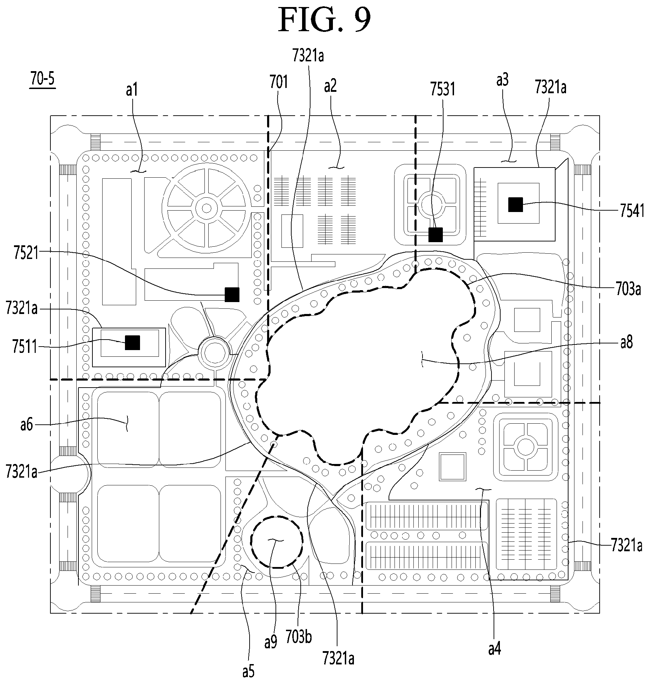

More specifically, referring to a map image 70-5 of FIG. 9, among a line 7311 of the road that a vehicle may drive on expressed by being divided from the image 70-3 for the satellite information, a line 7321b of the road that may be used by both people and robots or only by robots, a line 7331 of the road that a person may walk on, the boundary of a plurality of buildings or boundaries of regions, such as a playground or a parking lot, only the road line 7321b that may be used by robots may be divided and extracted (S13).

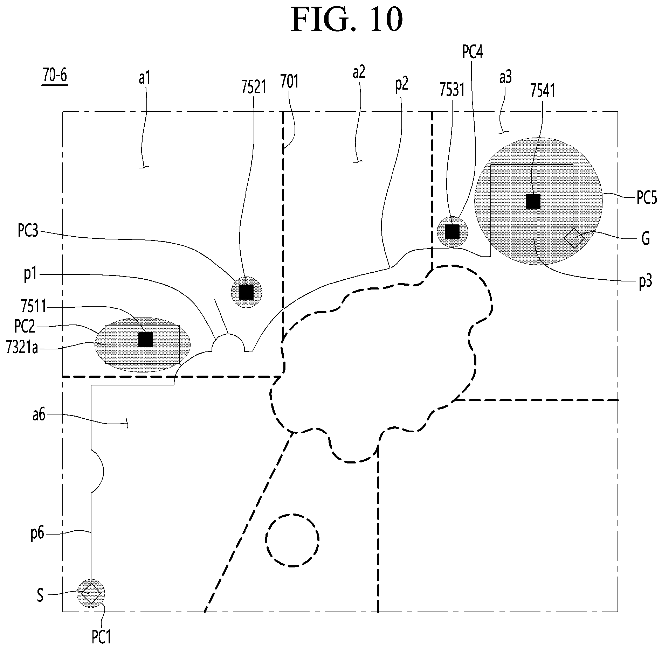

In addition, in the operation (S13) according to an exemplary embodiment of the present invention, the region dividing unit 289 may divide and extract the roads p6, p1, p2, and p3 that connect a starting point S and an arrival point G set for the robot expressed in a map image 70-6 of FIG. 10 to perform the mission, in the road line 7321b that only the robot may use.

In addition, as described above, the region dividing unit 289 may divide into a1, a2, a3, a4, a5, and a6 based on the amount of information that the robot may receive or the size of the region that the robot may drive based on images 70-1 to 70-3 for satellite information, may divide regions 711a and 711b that the robot cannot drive on, and may divide the line 7311 of a road that a vehicle may drive on, a line 7321b of a road that may be used by both people and robots or only by robots, a line 7331 of a road that people may walk on, a boundary of a plurality of buildings, or a boundary of a region, such as a playground or a parking lot, etc.

Also, the controller 210 may divide and extract roads 7321b that only the robot may use and roads p6, p1, p2, and p3 that connect the starting point S and the arrival point G set for the robot to perform a mission based on the aligned map images 70-4 to 70-6 in an overlapping manner through the path generating unit 2131 and the driving path map generating unit 2133 based on the region divided through the region dividing unit 289.

After the operation (S13), the robot 10 may receive (S151) 3D information (point cloud data (PCD)) stored in the database 30 through the communication unit 270. More specifically, the PCD may be received based on a usage path of the robot extracted in the operation (S13).

More specifically, referring to a map image 70-6 of FIG. 10, the PCD received in the operation (S151) may refer to 3D information on a specific region located on the usage path p6, p1, p2, and p3 of the robot.

The specific region may refer to, for example, a region PC1 including the starting point, a region PC2, PC3, and PC4 including an object that the robot passes through to perform a given mission, and a region PC5 including the arrival point of the robot.

That is, rather than receiving a large amount of PCD for the target space, by receiving PCD on the path that the robot may use, the driving path of the robot or map may be generated more effectively in the future.

Based on the map 70-6 generated in this manner, the controller 210 may select one of the different formats of maps that form the hybrid map based on the location of the robot determined by the location estimation unit 219 and use the selected map for the driving of the robot.

More specifically, the robot may drive using one of the different formats of maps based on the current location and information on the objects S, 7511, 7521, 7531, 7541, and G within the target region.

For example, when the robot is located on the driving path p2 formed in the second area a2, or when the robot enters the second area a2, etc., the robot may drive using the first map or the third map.

In addition, when the robot is located on the driving path p3 formed in the third area a3 or when the robot enters the third area a3, etc., the robot may drive using the second map.

That is, in section p2 in which information on objects is not required, a map with a relatively small amount of data may be used, and in section p3 in which information on objects is required, a map including 3D information may be used for driving safety, preventing deviation from the driving path, etc.

Meanwhile, the space map generating unit 285 generates a PCD-based space map (S153), and if the generated space map is converted into a 2D map by the map conversion unit 2871 (S155: Yes), the map alignment unit 2872 may merge the converted 2D map and the map (first map, global map) generated in the operation (S11) to generate a hybrid map (S171). The hybrid map may be referred to in the sense that different formats of maps are merged (overlapping and aligned), and the hybrid map in this operation (S171) may be referred to as a second map.

That is, the hybrid map generated in the operation (S171) may be referred to as a hybrid map in the sense that two maps including different information overlap, but it is obvious that included information is different from that of the hybrid map generated in the operation S19 later.

After the operation (S171), the map alignment unit 2872 may compare a matching rate (degree of overlap) of the two maps with a reference value and, if the matching rate exceeds the reference value (S173: No), the map alignment unit 2872 may align the two overlapping maps to generate an intermediate map (S175).

Alternatively, for example, the hybrid map generated in the operation (S171) may refer to a map in which two maps containing different information (the first map and the converted 2D map) are aligned in an overlapping manner, and in this case, if the matching rate (degree of overlap) is compared with the reference value in the operation (S173) and exceeds the reference value (S173: No), the intermediate map in the operation S175 may refer to the map already generated in the operation (S171).

The degree of overlap may be determined based on elements commonly included in the first map (2D layout data map based on satellite information) and the 2D map converted from the space map (3D Data), for example.

The elements that are commonly included may include, for example, the usage path of the robot, the road boundary, a plurality of nodes between the starting point and the destination set according to the mission of the robot, edges connecting the nodes, and the road on which the robot drives to perform the mission.

Meanwhile, if the space map generated in the operation (S155) is not converted into a 2D map (S155: No), the feature map generating unit (2831) may extract feature points for objects in the space map to generate a feature map (S157), as described above.

Also, the controller 210 may generate a hybrid map (S19) by merging two or more maps generated through the above process through the map generating unit 280 and the map merging unit 290.

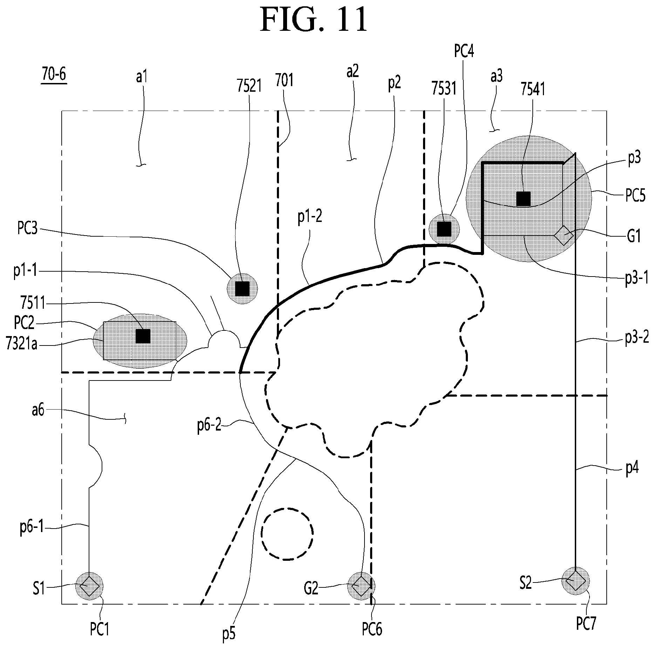

In the hybrid map generated as described above, as expressed in the map image 70-7 of FIG. 11, the first robot may drive along the road p6-1, p1-2, p2, p-3, and p3-1 connecting the starting point S1 and the arrival point G1, and the second robot may drive along the road p5, p6-2, p1-2, p2, p3, p3-2, and p4 connecting the starting point S2 and the arrival point G2.

Referring to the road based on the first area a1 on the map image 70-7, the first robot that may drive may use the road p1-1 and the road p1-2 to perform the mission, and among them, the road p1-2 may form a section that overlaps the road on which the second robot drives to perform the mission. That is, for the first robot and the second robot, the path section overlaps in the sections p1-2, p2, and p3 on the respective driving paths.

The overlapping section may be determined based on the road on which the robots divided in the first map drive to perform the mission, and when this overlapping section p1-2, p2, and p3 occurs, the determination whether to give a driving priority to which of the robots may be made based on the second map.

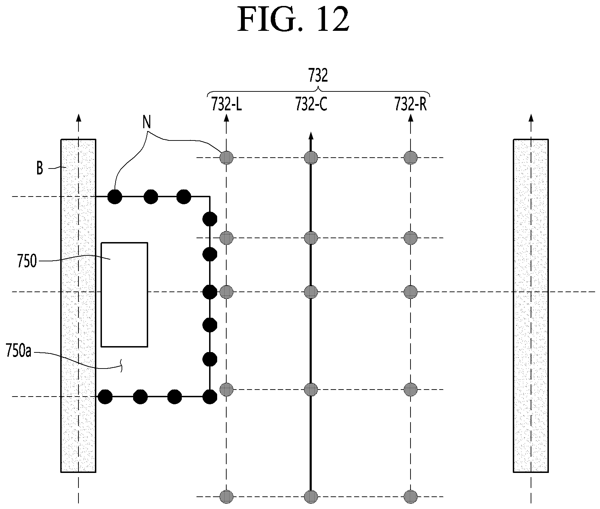

More specifically, referring to FIG. 12, FIG. 12 shows a map image including information on an avoidance zone 750a.

The avoidance zone 750a may refer to a region divided into a plurality of nodes N where the robot may move based on a facility 750, and in the present embodiment, the avoidance zone 750a refers to a region including the facility 750 by a road B and the plurality of nodes N.

The facility 750 may represent at least one of the buildings 7521 and 7531 existing on the driving path of the robots in FIG. 11 or the buildings 7511 and 7541 existing for mission execution and may represent one of the buildings 7521, 7531, and 7541 existing in the overlapping section of the driving paths of the first robot and the second robot.

The driving path 732 of the robot may include a center path 732-C and left and right paths 732-L and 732-R, and the robot may mainly move along the center path 732-C and may move along the left and right paths 732-L and 732-R in an event situation.

An example of the event situation is a case in which the robots encounter each other in the overlapping section or a case in which the robots drive at the same time. In such a case, among the plurality of robots, a robot having the avoidance zone 750a on its driving path may be given a driving priority.

More specifically, for example, in a situation in which the first robot drives based on the direction expressed on the driving path 732 (from bottom to top in FIG. 12) and the second robot drives based on the direction opposite to the direction expressed on the driving path 732 (from top to bottom in FIG. 12), whether the avoidance zone 750a exists on the driving path may be determined based on the left side of the driving path.

That is, in the aforementioned example, since the first robot has the avoidance zone 750a on the left of the driving path 732, if the first robot and the second robot encounter each other while driving in different directions on the overlapping driving path, the second robot may be given a driving priority. In this case, the first robot may pass through the avoidance zone 750a or enter the avoidance zone 750a and then return to the driving path 732 after a preset time.

In addition, for example, in a case in which the first robot and the second robot drive along the driving path 732 in the same direction at the same time and an overlapping section may occur, the robot that enters the driving path 732 first may be given a driving priority.

Examples of such driving priority being granted are not limited to those described above, and various examples may be applied.

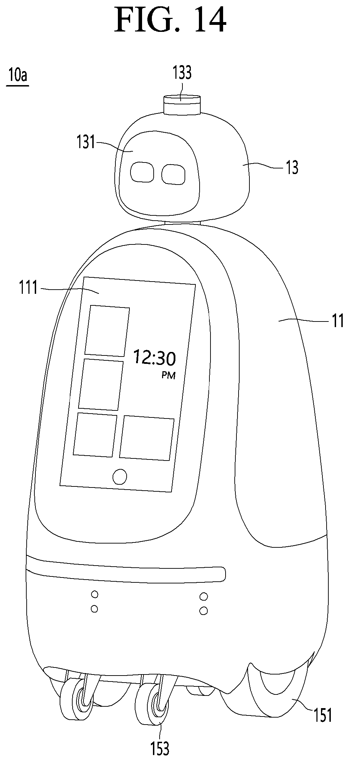

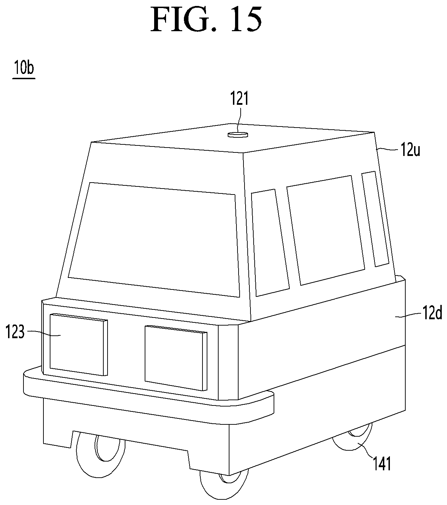

FIGS. 14 and 15 are diagrams illustrating a robot according to an exemplary embodiment of the present invention.

The following descriptions are given with reference to FIGS. 14 and 15.

As for the robot of the present exemplary embodiment, a robot 10a equipped with a display unit 111 on the front as shown in FIG. 14 and requiring information exchange with a user may be suitable for driving in an indoor environment, and a robot 10b sealed by a housing 12 as shown in FIG. 12 and not having a separate display unit may be suitable for driving in an outdoor environment.

The robot 10a of FIG. 14 may include a body portion 11, driving portions 151 and 153, and a head portion 13.

The head portion 13 is provided with a display unit 131 on the front to display information for communication with a user, and a sensor 133 is provided in an upper portion of the head portion 13 to collect various information necessary for driving the robot 10a.

The body portion 11 is provided with a display portion 111 on the front to display information required for the user or a status of the robot, etc. For example, the display portion 131 of the head portion may display information in the form of feedback according to an input value of the user or the administrator, and the display portion 111 of the body portion may display the time, weather, information of the target space, the status of the robot, etc., and may display the aforementioned information in various manners by the user's operation.

The driving portion of the present exemplary embodiment may be provided in the form of a wheel on a lower portion of the body portion 11, and may include a main wheel 151 that rotates directly by a motor and an auxiliary wheel 153 that prevents the robot 10a from overturning and rotates by friction with the ground according to the movement of the robot 10a.

The robot 10b of FIG. 15 has a structure in which an internal structure of the robot is firmly sealed by the housing 12, and unlike the robot 10a of FIG. 14, structures, such as the display portions 111 and 113 that are relatively weak in durability are omitted.

More specifically, the housing 12 forms a combined structure of an upper housing 12u and a lower housing 12d, and a sensor 121 is provided on an upper surface of the upper housing 12u, and a sensor 123 is also provided on a front surface of the lower housing 12d. Of course, various types of sensors may be adopted for each of the sensors 121 and 123 depending on the purpose.

In addition, as described above, in the robot 10b of the present exemplary embodiment, the wheels 141 forming the driving portions for traveling in an outdoor environment may directly rotate by the power transmission of the motor.

The robots 10a and 10b described above are exemplary drawings for expressing the robots described in the following exemplary embodiments and are a type of robot that constitutes a logic and system described below, so they are not necessarily limited thereto.

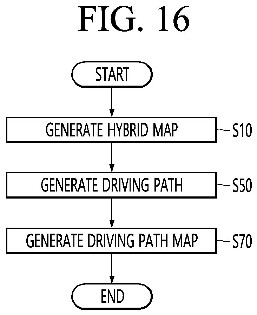

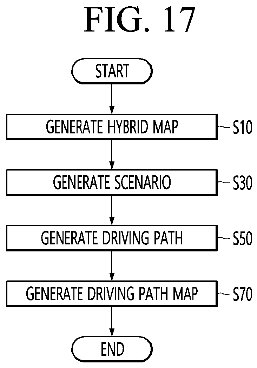

FIG. 16 and FIG. 17 are diagrams illustrating a method of generating a driving path of a robot according to an exemplary embodiment of the present invention.

The following descriptions are given with reference to FIG. 16 and FIG. 17.

The method of generating a driving path map of a robot according to the present exemplary embodiment may include generating a hybrid map (S10), generating a driving path (S50), and generating a driving path map (S70).

The method of generating a driving path map of a robot according to various exemplary embodiments of the present invention may include generating a hybrid map (S10), generating a scenario (S30), generating a driving path (S50), and generating a driving path map (S70).

The generating of a hybrid map (S10) described above will be omitted and the subsequent operations will be described below.

The robot 10 may generate a scenario according to a given mission within a generated map. For example, the generated mission may be surveillance for an object in a target space, and the scenario generated according to the given mission may refer to monitoring (surveillance) for specific objects.

The robot 10 may generate a scenario through the controller 210 according to the mission assigned through the server 50 and may generate a driving path (S50) through the path generating unit 2131 according to the generated scenario.

Alternatively, the mission and the scenario may be set to be the same, and in this case, the robot 10 may generate a driving path (S50) through the path generating unit 2131 according to the scenario (or mission) input through the server 50.

The operation of generating a driving path (S50) may be performed through the path generating unit 2131 as described above, and a path may be generated by selecting at least one of different formats of maps according to a preset reference. In addition, as an example, a process of generating a path candidate group including a plurality of driving paths for performing the mission or scenario and selecting an optimal path among them is also as described above.

For example, the robot 10 may drive along the generated driving path and perform a mission and may detect an event that occurs during the mission through various components included in the robot 10.

The event includes various abnormal situations that interfere with the robot's mission or driving, requiring the robot to modify a preset driving path and does not include an event in which the robot is not required to modify the preset driving path even if some interference factors occur in the robot's mission or driving.

The event detection may be performed through the components included in the robot 10 as described above, or may be performed by transmitting event information detected from an observer's perspective in the server 50 to the robot 10.

In addition, the preset driving path may be modified according to the event detection.

Meanwhile, the robot 10 may generate a driving path map (S70) based on the generated driving path. Of course, the driving path map may be generated based on the modified driving path according to the aforementioned event detection.

Meanwhile, after the driving path is generated (S50) through the path generating unit 2131, the driving path map generating unit 2133 may classify the driving path. The driving path classification is classifying by determining whether the generated driving path is a path generated based on a map in a certain format. Since the generated driving path in the present exemplary embodiment is a path generated based on a hybrid map in which maps in various formats are aligned in an overlapping manner as described above, the driving path classification may refer to dividing the driving path based on a preset reference and classifying whether in which format each of the divided portions of the path is generated based on a map.

Alternatively, the driving path classified in the driving path classification operation may refer to dividing the driving path generated for the robot to perform a mission according to a preset reference. In this case, the reference for division may be, for example, whether the path includes a mission target object or whether the path is after the mission has been performed.

The generated driving path (some of the divided paths) is determined to be a driving path on the global map, and if it is not a driving path on the global map, it is determined to be a driving path on the local map, and if it is not a driving path on the local map, it may be considered as a case in which there is a problem with the generated driving path or the information forming the driving path divided for classification, and therefore, the process may be repeated from the driving path classification operation.

Hereinabove, the present invention has been described with reference to the exemplary embodiments thereof. All exemplary embodiments and conditional illustrations disclosed in the present specification have been described to intend to assist in the understanding of the principle and the concept of the present invention by those skilled in the art to which the present invention pertains. Therefore, it will be understood by those skilled in the art to which the present invention pertains that the present invention may be implemented in modified forms without departing from the spirit and scope of the present invention.

Therefore, the exemplary embodiments disclosed herein should be considered in an illustrative aspect rather than a restrictive aspect. The scope of the present invention is shown in the claims rather than the foregoing description, and all differences within the equivalent range should be interpreted as being included in the present invention.

Meanwhile, the method of providing a driving related guidance service according to various exemplary embodiments of the present invention described above may be implemented as programs and be provided to servers or devices. Therefore, the respective apparatuses may access the servers or the devices in which the programs are stored to download the programs.

In addition, the method according to various exemplary embodiments of the present invention described above may be implemented as a program and stored in various non-transitory computer readable media and provided. The non-transitory computer readable medium is not a medium that stores data for a short time, such as a register, a cache, a memory, or the like, but means a machine readable medium that semi-permanently stores data. Specifically, various applications or programs described above may be stored and provided in the non-transitory computer readable medium, such as a compact disk (CD), a digital versatile disk (DVD), a hard disk, a Blu-ray disk, a universal serial bus (USB), a memory card, a read only memory (ROM), or the like.

Although the exemplary embodiments of the present invention have been illustrated and described hereinabove, the present invention is not limited to the specific exemplary embodiments described above, but may be variously modified by those skilled in the art to which the present invention pertains without departing from the scope and spirit of the present invention as claimed in the claims, and such modifications should not be individually understood apart from technical concepts or prospects of the present invention.

## Claims

1. A control method of a hybrid map-based robot, the control method comprising:
receiving satellite information of a target region;
generating a first map of the target region based on the satellite information;
dividing a region in the first map according to a preset reference;
receiving 3D information (point cloud data) for a region including a road available for the robot to drive on among the divided regions;
generating a second map based on the 3D information;
generating a hybrid map by aligning the first map and the second map in an overlapping manner; and
determining a location of the robot within the target region,
wherein the robot drives using one of the different formats of maps forming the hybrid map depending on a location within the target region.

2. The control method of claim 1, wherein the first map is a 2D map of the target region based on the satellite information.

3. The control method of claim 2, wherein the preset reference is a reference as to whether a road is a road available for the robot to drive on.

4. The control method of claim 3, wherein the hybrid map is generated by aligning the first map and the second map in an overlapping manner based on a boundary line of a region that meets the preset reference.

5. The control method of claim 4, wherein the hybrid map is generated by converting coordinates of the first map into a local coordinate system and then aligning the local coordinate system with the second map in an overlapping manner.

6. The control method of claim 2, further comprising:
setting a driving path of the robot,
wherein the robot drives using one of the different formats of maps forming the hybrid map according to a location on the driving path.

7. The control method of claim 2, further comprising
generating a space map based on the 3D information;
converting the space map into a 2D map; and
generating a third map by aligning the first map with the converted 2D map in an overlapping manner,
wherein the hybrid map is generated by aligning at least two maps among the first map, the second map, the third map, and the space map in an overlapping manner.

8. The control method of claim 7, wherein the second map is a feature map generated based on feature points extracted from the space map.

9. The control method of claim 8, further comprising:
setting a driving path of the robot,
wherein the space map is generated based on 3D information collected along the driving path of the robot..

10. The control method of claim 9, wherein
the second map includes information generated based on feature points of objects existing on the driving path, and
the third map includes 2D type location information of the objects.

11. The control method of claim 10, wherein
the robot drives using one of different formats of maps forming the hybrid map based on a current location and information about the objects within the target region.

12. The control method of claim 11, wherein
the robot drives using one of the second map or the third map depending on the current location of the robot and distances to the objects.

13. The control method of claim 8, further comprising:
a matching degree determining operation of determining whether a matching degree of a reference region is equal to or greater than a preset reference value when the first map is aligned with the converted 2D type map in an overlapping manner.

14. The control method of claim 13, wherein the converting of the space map into a 2D map, the generating of the third map, and the determining of the matching degree are performed sequentially.

15. The control method of claim 13, wherein
the converting of the space map into a 2D map, the determining of the matching degree, and the generating of the third map are performed sequentially, and
the generating of the third map is performed when the matching degree of the reference region is equal to or higher than the preset reference value in the determining of the matching degree.

16. The control method of claim 8, wherein
the hybrid map is generated by aligning the second map and the third map in an overlapping manner.

17. A control method of a hybrid map-based robot, the control method comprising:
receiving satellite information of a target region;
generating a first map of the target region based on the satellite information;
dividing a region in the first map according to a preset reference;
setting a driving path of a robot;
receiving 3D information (point cloud data) for a region including a driving path of the robot among the divided regions;
generating a second map based on the 3D information;
generating a hybrid map by aligning the first map and the second map in an overlapping manner; and
determining a location of the robot within the target region,
wherein the robot drives using one of the different formats of maps forming the hybrid map according to a location within the target region.

18. A control apparatus of a hybrid map-based robot that drives in a target region, the control apparatus comprising:
a communication unit transmitting and receiving information necessary for generating a map;
a map generating unit generating a map of the target region by aligning two or more different formats of maps in an overlapping manner;
a location estimation unit determining a location of the robot; and
a processor selecting one of two or more maps formed in different formats according to the location of the robot,
wherein the map generating unit aligns a first map generated based on satellite information of the target region and a second map generated based on 3D information of the target region in an overlapping manner, and
the processor selects one of the first map and the second map as a map for driving of the robot based on a current location of the robot and location information of objects included in the 3D information.

19. A program stored on a computer-readable recording medium including a program code for executing the control method of a hybrid map-based robot described in any one of claims 1 to 17.

20. A computer-readable recording medium including a program code for executing the control method of a hybrid map-based robot described in any one of claims 1 to 17.
